Europäisches Patentamt

European Patent Office

Office européen des brevets

(11) Publication number: **0 188 914**
**B1**

(12) **EUROPEAN PATENT SPECIFICATION**

(45) Date of publication of patent specification: **27.12.90**

(51) Int. Cl.⁵: **C 08 F 210/02, C 08 F 4/649**

(21) Application number: **85309379.7**

(22) Date of filing: **20.12.85**

(54) Process for copolymerization of ethylene.

(30) Priority: **24.12.84 JP 270771/84**

(43) Date of publication of application:
**30.07.86 Bulletin 86/31**

(45) Publication of the grant of the patent:
**27.12.90 Bulletin 90/52**

(84) Designated Contracting States:
**BE DE FR GB IT NL SE**

(56) References cited:
**EP-A-0 009 244**
**DE-A-2 713 552**
**US-A-4 288 580**

**Polymer Preprints, Am. Chem. Soc., Div. Polym. Chem., Vol. 24, 1983, pages 114 and 115**

(73) Proprietor: **Tonen Corporation**
**1-1 Hitotsubashi, 1-Chome Chiyoda-Ku Tokyo 100 (JP)**

(72) Inventor: **Tachikawa, Mamoru**
**5-13, Nishi 2-chome**
**Kamifukuoka-shi Saitama-ken (JP)**
Inventor: **Ueki, Satoshi**
**4-7-301, Tate 2-chome**
**Shiki-shi Saitama-ken (JP)**
Inventor: **Sakuma, Masato**
**17-12, Harigaya 2-chome**
**Urawa-shi Saitama-ken (JP)**
Inventor: **Miyazaki, Makoto**
**4-3, Yanagi-cho**
**Sakado-shi Saitama-ken (JP)**

(74) Representative: **Northover, Robert Frank et al**
**ESSO Chemical Limited Esso Chemical Research Centre P.O. Box 1**
**Abingdon Oxfordshire, OX13 6BB (GB)**

The file contains technical information submitted after the application was filed and not included in this specification

Courier Press, Leamington Spa, England.

**Description**

The present invention relates to a process for the copolymerization of ethylene and, more particularly, to a process for copolymerizing ethylene with an alpha-olefin.

Prior Art

There are several commercial processes for producing so-called linear low-density polyethylene (LLDPE) by copolymerizing ethylene with an alpha-olefin such as 1-butene in the presence of a Ziegler-Natta catalyst. Many of them are designed for gas phase polymerization or slurry polymerization. A variety of catalysts have been proposed for the individual processes, and they exhibit their own performance. The polymerization catalyst needs to meet many requirements. Particularly it should have a high catalytic activity and provide polymer particles having a high bulk density. These requirements, however, are generally contradictory to each other, and it is difficult to provide a polymerization catalyst that meets the two requirements at the same time.

US 4 288 580 discloses a process for propylene polymerisation to reduce alkane solubles. The catalyst is made by admixing isobutylvinyl ether and alkylaluminum prior to mixing with titaniumtrichloride and finally incorporating sulfurdioxide.

Polymer preprints (Am. Chem. Soc. Div. Polym. Chem.) Vol 24 1983 pp 114 and 115 discloses a propylenepolymerisation process using an ether treated solvay catalyst with diethyl aluminumchloride activator. CO and allene are disclosed to inhibit polymerisation.

Problems to be Solved by the Invention

It is an object of the present invention to provide a process for the copolymerisation of ethylene which is capable of producing ethylene copolymers with a high bulk density in high yields.

Means to Solve the Problems

Summary of the Invention

The present inventors carried out a series of researches based on the assumption that a polymerization catalyst with a high catalytic activity suddenly generates reaction heat because of its high initial activity, and this reaction heat melts the particles of copolymer which have just been formed, resulting in copolymer particles of poor properties. As a result, it was found that if copolymerization of ethylene is performed using a polymerization catalyst, with its catalytic activity temporarily inhibited, an ethylene copolymer having a high bulk density is obtained in high yields, even though the polymerization catalyst is of high activity type. The present invention was completed based on this finding.

According to the invention there is provided a process for copolymerizing ethylene with an alpha-olefin to produce LLDPE in the presence of a catalyst system comprising (1) titanium halide containing catalyst component being obtained by reducing titanium tetrachloride with one of hydrogen, aluminum, or an organometallic compound selected from organo compounds of Groups I—III of the Periodic Table to yield titanium trichloride or a complex thereof, and treating the titanium trichloride or its complex with an activating agent selected from one of an electron donor, halogen element or halogen-containing compound or mixtures thereof, and (2) an organometallic cocatalyst, the improvement comprising bringing said catalyst component into contact with an activity inhibitor being employed at a concentration in the range of 0.0001 to 0.01 gram-mol for 1 gram-atom of titanium in the catalyst component either

(i) prior to contact with the organometallic cocatalyst, or

(ii) after said catalyst component and organometallic cocatalyst have been mixed, and thereafter copolymerizing ethylene with an alpha-olefin, said activity inhibitor being selected from one of $CO_2$, $CO$, $SO_2$, allene compounds, conjugate dienes and alicyclic conjugated dienes.

Polymerization catalyst

The polymerization catalyst used in this invention is composed of (a) a catalyst component containing titanium and halogen as essential constituents and (b) an organometallic compound.

(a) Catalyst Component

The catalyst component contains titanium and halogen as essential constituents, and there are many known such catalyst components. Typical ones are titanium trihalide (e.g., titanium trichloride) and titanium tetrahalide (e.g., titanium tetrachloride).

These titanium halides may be used as such for polymerization; but in this invention where high catalytic activity is required, the catalyst component of high activity is produced by the following processes.

(i) By reducing titanium tetrachloride with hydrogen, aluminum, or an organometallic compound selected from organic compounds of Groups I—III of the Periodic Table. It includes, for example organic compounds of lithium, magnesium, calcium, zinc, and aluminum. Organoaluminum compounds are preferrred among them.

The organoaluminum compound that can be used is one which is represented by the formula $R_nAlX_{3-n}$ (where R is a $C_1$—$C_{18}$ alkyl group or $C_1$—$C_{12}$ aryl group; X is a halogen atom, a $C_1$—$C_{18}$ alkoxy group, or

2

hydrogen atom; and n is a number in the range of $1 \leq n \leq 3$) to give titanium trichloride or a complex compound thereof, and treating it with an activating agent such as electron donor, halogen element, or halogen-containing compound.

The electron donor compound includes, for example, alcohols, ethers, carboxylic esters, lactones, amines, carboxylic acid halides, carboxylic acid anhydrides, carboxylic amides, nitriles, ketones, aldehydes, thioethers, and organic phosphorus-containing compounds.

Examples of the alcohols include methanol, ethanol, propanol, butanol, hexanol, octanol, cyclohexanol, phenol, cresol, catechol, ethylene glycol, 2,2,2-trichloroethanol, 3-chloro-1-propanol, and p-chlorophenol. Examples of the ethers include diethyl ether, dipropyl ether, diisopropyl ether, dibutyl ether, diisobutyl ether, diisoamyl ether, dihexyl ether, di-2-ethylhexyl ether, anisole, and tetrahydrofuran. Examples of the carboxylic esters include ethyl acetate, butyl butyrate, propyl pivalate, ethyl acrylate, ethyl methacrylate, diethyl succinate, butyl adipate, diethyl maleate, ethyl benzoate, methyl p-toluylate, ethyl p-anisate, monobutyl phthalate, dibutyl phthalate, and triethyl trimellitate. Examples of the lactones include gamma-butyrolactone and delta-valerolactone. Examples of the amines include methylamine, ethylamine, diethylamine, tributylamine, aniline, and tetramethylenediamine. Examples of the carboxylic acid halides include acetic acid chloride, butyric acid bromide, acrylic acid bromide, methacrylic acid chloride, sebacic acid bromide, maleic acid chloride, benzoyl chloride, p-toluic acid chloride, p-anisic acid chloride, phthalic acid dichloride, maleic acid methyl chloride, and phthalic acid butyl chloride. Examples of the carboxylic acid anhydrides include acetic anhydride, maleic anhydride, benzoic anhydride, and phthalic anhydride. Examples of the carboxylic acid amides include acetamide, benzamide, and toluamide. Examples of the nitriles include acetonitrile, benzonitrile, and tolunitrile. Examples of the ketones include acetone, methyl ethyl ketone, methyl isobutyl ketone, benzophenone, and acetophenone. Examples of the aldehydes include acetaldehyde, propionaldehyde, hexylaldehyde, benzaldehyde, and naphthoaldehyde. Examples of the organic phosphorus-containing compounds include trimethyl phosphite, triphenyl phosphite, diphenylethyl phosphonate, diethylbenzyl phosphonate, tributyl phosphine, and triphenyl phosphine. Examples of the thioethers include diethyl thioether, dibutyl thioether, diphenyl thioether, and ethyl phenyl thioether.

The halogen element includes, for example, chlorine, iodine, and bromine.

The halogen-containing compound includes, for example, hydrogen halide such as hydrogen chloride and hydrogen bromide; halogenated hydrocarbon such as monochloroethane, dichloroethane, trichloroethane, tetrachloroethane, hexachloroethane, dichloropropane, tetrachloropropane, hexachloropropane, dichlorobutane, trichloropentane, and dichlorobenzene; halides of metallic or non-metallic elements such as $TiCl_4$, $SiCl_4$, $SnCl_4$, $BCl_3$, $AlCl_3$, $SbCl_3$, $BI_3$, $PCl_3$, $PCl_5$, and $HSiCl_3$; and oxyhalides of non-metallic elements such as $SO_2Cl_2$, $SOCl_2$, $NOCl$, and $POCl_3$.

These activating agents may be used alone or in combination with one another. Where two or more kinds of activating agents are used, they may be used simultaneously or consecutively. The treatment with the activating agent may be accomplished in the presence of an inert solvent such as hexane, heptane, octane, cyclohexane, benzene, toluene, and xylene.

The activation by the activating agent is accomplished by treating titanium trichloride or a complex compound thereof:

(1) with an electron donor compound in the presence or absence of a halogen element and then with a halogen compound of metallic or non-metallic element.

(2) with a halogen compound of metallic or non-metallic element in the presence of a halogen element.

(3) with an electron donor compound and then with a halogen compound of metallic or non-metallic element and a complex compound of an electron donor compound.

(4) with an electron donor compound and then with a halogenated hydrocarbon.

(5) with a halogenated hydrocarbon in the presence of an electron donor compound.

(6) or by treating the treated product in (4) or (5) with a halogen compound of metallic or non-metallic element.

(b) Organometallic compound.

The organometallic compound that can be used in this invention is an organic compound of a metal belonging to Groups I to III of the Periodic Table. It includes, for example, organic compounds of lithium, magnesium, calcium, zinc, and aluminum. Organoaluminum compounds are preferred among them.

The organoaluminum compound that can be used is one which is represented by the formula $R_nAlX_{3-n}$ (where R is a $C_1$—$C_{18}$ alkyl group or $C_1$—$C_{12}$ aryl group; X is halogen atom, a $C_1$—$C_{18}$ alkoxy group, or hydrogen atom; and n is a number in the range of $1 \leq n \leq 3$). Examples of this compound include trimethyl aluminum, triethyl aluminum, tripropyl aluminum, triisobutyl aluminum, trihexyl aluminum, dimethyl aluminum chloride, diethyl aluminum chloride, diethyl aluminum bromide, diisobutyl aluminum chloride, methyl aluminum dichloride, ethyl aluminum dichloride, ethyl aluminum dibromide, isobutyl aluminum dichloride, ethyl aluminum sesquichloride, dimethyl aluminum methoxide, diethyl aluminum phenoxide, diethyl aluminum hydride, and diisobutyl aluminum hydride.

More than two kinds of organometallic compounds can be used, and they can be used in combination with the electron donor compound that is used in the preparation of the catalyst component.

3

## EP 0 188 914 B1

### Activity Inhibitor

The activity inhibitor includes, for example, inorganic gases such as carbon monoxide, carbon dioxide, and sulfur dioxide; allene compounds such as propadiene, 1,2-butadiene, and 1,2-pentadiene; conjugated diene compounds such as 1,3-butadiene and isoprene; and alicyclic conjugated diene compounds such as norbonadiene and 1,5-cyclooctadiene.

### Process for Copolymerization

The present invention is intended to perform the copolymerization of ethylene with an alpha-olefin. Examples of the alpha-olefin include propylene, 1-butene, 4-methyl-1-pentene, 1-hexene, and 1-octene.

The copolymerization may be performed in either gas phase or liquid phase. The liquid phase polymerization may be accomplished in an inert hydrocarbon such as butane, pentane, hexane, heptane, octane, cyclohexane, benzene, toluene, and xylene. The polymerization temperature is usually $-80°C$ to $+150°C$, preferably 0 to 120°C. The polymerization pressure is 1.01 to 60.8 bar (1 to 60 atm). The molecular weight modification of the resulting polymer is accomplished by the aid of hydrogen or any known molecular weight modifier present in the system. The quantity of the alpha-olefin to be copolymerized is usually less than 20 wt%, particularly 5 to 15%, based on the quantity of ethylene. The copolymerization may be performed continuously or batchwise, or in one step or in two or more steps.

According to this invention, the catalyst component is activated with an organometallic compound. Usually this is accomplished by mixing the catalyst component with an organometallic compound and permitting the mixture to stand for a certain period of time. The period can be reduced when the temperature is high.

The activated polymerization catalyst is then contacted with the activity inibitor, whereby the active sites on the polymerization catalyst are partly or entirely modified by the activity inhibitor. Thus the catalyst becomes inactivated temporarily. The inactivated state disappears in the presence of an organometallic compound, ethylene (or alpha-olefin monomer), and/or hydrogen. Therefore, the contacting with the activity inhibitor should be performed immediately before the polymerization catalyst is used, or the polymerization catalyst which has been contacted with the activity inhibitor should be stored at low temperatures or in the absence of an organometallic compound, olefin monomer, or hydrogen. Alternatively, the activity inhibitor may be aded when the catalyst component is activated with an organometallic compound.

According to this invention, it is important to control the amount of the activity inhibitor. This amount is 0.0001 to 0.01 gram-mol, preferably 0.0002 to 0.001 gram-mol, for 1 gram-atom of titanium in the catalyst component, in the case where the catalyst component is prepared by the above-mentioned method (i). The amount varies depending on the kind and amount of the organometallic compound as constituent of the polymerization catalyst, and on the amount of hydrogen.

The polymerization catalyst is prepared from the catalyst component and organometallic compound so that the organometallic compound amounts to 1 to 2000 gram-mol, preferably 20 to 500 gram-mol, for 1 gram-atom of titanium in the catalyst component.

According to this invention, the polymerization catalyst is inactivated temporarily in the initial stage of polymerization; but the catalytic activity is restored as the copolymerization reaction proceeds. The restoration of activity may be accelerated by supplying an additional organometallic compound.

### Effect of the Invention

The process of this invention makes it possible to produce ethylene copolymers having a high bulk density with a minimum loss of productivity per unit weight of the polymerization catalyst.

### Examples

The invention is illustrated with the following examples, in which percent is by weight.

The bulk density of the resulting copolymer was measured according to ASTM D1895—69, method A. The melt index (MI) was measured according to ASTM D1238. The true density was measured according to JIS K7112—D that employs specimens prepared according to JIS K6760 and water-isopropanol mixture.

### Example 1

#### Preparation of Catalyst Component

In a 200 ml flask, with the atmosphere therein replaced with nitrogen, was placed 6.0 g powder silica [prepared by calcining G—952, a product of Davison Co., in a nitrogen stream at 200°C for 2 hours and further at 700°C for 5 hours] and 30 ml of 30% solution of n-butylethyl magnesium in n-heptane. The reactants were stirred at 90°C for 45 minutes. The solids were washed with n-hexane, 50 ml of n-heptane was added, and 10 ml of ethanol was added dropwise with stirring. The reactants were heated at 90°C for 1 hour. The solids were washed with n-hexane and dried. 30 ml of n-heptane and 3.5 ml of trichlorosilane were added, followed by stirring at 70°C for 6 hours. The solids were washed with n-hexane and dried. 90 ml of toluene and 1.5 ml of titanium tetrachloride were added, followed by stirring at 90°C for 2 hours. The solids were washed with n-hexane and dried. Thus there was obtained a catalyst component containing Mg 4.6%, Ti 1.1% and Cl 17.1%.

4

Copolymerization of ethylene with 1-butene

In a 1.5 liter autoclave (SUS—316) equipped with a stirrer were placed under the atmosphere of nitrogen 700 ml of isobutane, 0.7 mmol of triisobutyl aluminum, and a glass ampoule (sealed under the atmosphere of nitrogen) containing 60.3 mg of the catalyst component prepared as mentioned above. The polymerization system was heated to 80°C. Hydrogen was introduced until the partial pressure of hydrogen reached 1.47 bar (1.5 kg/cm$^2$). The ampoule was broken by rotating the stirrer, and the catalyst component was contacted with triisobutyl aluminum for 2 minutes while stirring. Carbon monoxide ($4 \times 10^{-3}$ mmol) diluted with nitrogen was added. Ethylene was introduced until the pressure reached 5.07 bar (5 atm). One minute later, 30 g of 1-butene was added to start polymerization. Polymerization was performed for 2 hours while supplying ethylene so that the total pressure of the polymerization system was kept constant.

After the polymerization was complete, unreacted monomers and isobutane were purged. The resulting white polymer poweder was dried in vacuo at 70°C for 10 hours. There was obtained 253 g of ethylene-1-butene copolymer having an MI of 1.1 g/10 min, a bulk density of 0.41 g/cc, and a true density of 0.9255 g/cc. The specific catalytic activity was as follows:

$$Ec = 420 \text{ g-polymer/g-catalyst component} \cdot hr \cdot \text{ethylene partial pressure}$$

$$Et = 37.5 \text{ kg-polymer/g-titanium} \cdot hr \cdot \text{ethylene partial pressure.}$$

Comparative Example 1

Copolymerization of ethylene with 1-butene was performed in the same manner as in Example 1 except that carbon monoxide was not added. There was obtained a copolymer having an MI of 1.5 g/10 min, a bulk density of 0.29 g/cc, and a true density of 0.9267 g/cc.

$$Ec = 494 \text{ and } Et = 44.2$$

Example 2

Preparation of Catalyst Component

4.5 g of silica was contacted with n-butylethyl magnesium in the same manner as in Example 1. After washing, the solids were contacted with 50 ml of n-heptane and 20 ml of ethyl orthoformate at 90°C for 1 hour, followed by washing with n-hexane. The solids were contacted with a mixture of 20 ml of trichlorosilane and 50 ml of n-heptane at 70°C for 1 hour, followed by washing with n-hexane. The solids were finally contacted with 50 ml of toluene and 0.5 ml of titanium tetrachloride at 90°C for 0.5 hours, followed by washing with n-hexane and drying. Thus there was obtained a catalyst component containing Mg 3.8%, Ti 0.48%, and Cl 14.0%.

Copolymerization of Ethylene with 1-Butene

Copolymerization of ethylene with 1-butene was performed in the same manner as in Example 1 except that the catalyst component obtained as mentioned above was used. The results are shown in Table 1.

Example 3

Preparation of a Catalyst Component

In a 200 liter flask, with the atmosphere therein replaced with nitrogen, were placed 4.7 g of silica and 7.5 ml of a saturated solution of Mg(OCH$_3$)$_2$ in methanol, followed by stirring for 10 minutes. Methanol was removed by vaporization under nitrogen stream and vacuum. 7.5 ml of the same saturated solution was added again and methanol was removed by vaporization in the same manner as mentioned above. The reaction product was dried in vacuo at about 90°C for 2 hours. Then, 30 ml of n-heptane and 40 ml of trichlorosilane were added, followed by stirring at 70°C for 5 hours. The resulting solids were washed with n-hexane and then dried. 50 ml of toluene and 20 ml of titanium tetrachloride were added, followed by stirring at 90°C for 1 hour. The solids were washed with n-hexane and dried. Thus there was obtained a catalyst component containing Mg 1.8%, Ti 0.63%, and Cl 8.3%.

Copolymerization of Ethylene with 1-Butene

Copolymerization of ethylene with 1-butene was performed in the same manner as in Example 1 except that the catalyst component obtained as mentioned above was used. The results are shown in Table 1.

Example 4

Preparation of Catalyst Component

In a 200 liter flask, with the atmosphere therein replaced with nitrogen, were placed 2.2 g Mg(OC$_2$H$_5$)$_2$ and 40 ml of n-octane. A solution containing 5 g of titanium tetrachloride in 25 ml of toluene was added with stirring, and the reactants were heated and stirred under reflux. The resulting solids were washed with n-hexane and dried in a nitrogen stream and then in vacuum. Thus there was obtained a catalyst component containing Mg 13.5%, Ti 11.4%, and Cl 72.4%.

Copolymerization of Ethylene with 1-Butene

Copolymerization of ethylene with 1-butene was performed in the same manner as in Example 1 except that 61.1 mg of the catalyst component obtained as mentioned above was used and $1.8 \times 10.^{-3}$ mmol of carbon monoxide was added. The results are shown in Table 1.

Comparative Examples 2 to 4

Copolymerization of ethylene with 1-butene was performed in the same manner as in Comparative Example 1 except that the catalyst component obtained in Examples 2 to 4 were used. The results are shown in Table 1.

Example 5

Copolymerization of ethylene with 1-butene was performed in the same manner as in Example 1 except that 55.2 mg of the catalyst component obtained in Example 1 was used and carbon monoxide was replaced by $0.9 \times 10.^{-3}$ mmol of allene. The results are shown in Table 1.

Example 6

Copolymerization of ethylene with 1-hexene was performed in the same manner as in Example 1 except that the amount of catalyst component was changed to 70.6 mg, the amount of carbon monoxide was changed to $4.7 \times 10.^{-3}$ mmol, and 1-butene was replaced by 60 g of 1-hexene. The results are shown in Table 1.

Table 1

| Example | Activity inhibitor | MI (g/10 min) | Bulk density (g/cm³) | True density (g/cm³) | Ec * | Et ** |
|---|---|---|---|---|---|---|
| 1 | CO | 1.1 | 0.41 | 0.9255 | 420 | 37.5 |
| 2 | CO | 0.81 | 0.40 | 0.9269 | 233 | 48.5 |
| 3 | CO | 0.52 | 0.39 | 0.9279 | 285 | 45.5 |
| 4 | CO | 1.1 | 0.39 | 0.9300 | 278 | 2.4 |
| 5 | Allene | 0.84 | 0.41 | 0.9283 | 395 | 35.3 |
| 6 | CO | 0.46 | 0.42 | 0.9275 | 337 | 30.1 |
| Comparative Example 1 | none | 1.5 | 0.29 | 0.9267 | 494 | 44.2 |
| Comparative Example 2 | none | 0.85 | 0.35 | 0.9266 | 256 | 53.3 |
| Comparative Example 3 | none | 0.48 | 0.34 | 0.9276 | 324 | 51.6 |
| Comparative Example 4 | none | 1.1 | 0.28 | 0.9310 | 331 | 2.9 |

* g/g-cat·hr·atm
** kg/g-Ti·hr·atm

7

# EP 0 188 914 B1

## Claims

1. A a process for copolymerizing ethylene with an alpha-olefin to produce LLDPE in the presence of a catalyst system comprising (1) titanium halide containing catalyst component being obtained by reducing titanium tetrachloride with one of hydrogen, aluminum, or an organometallic compound selected from organo compounds of Groups I—III of the Periodic Table to yield titanium trichloride or a complex thereof, and treating the titanium trichloride or its complex with an activating agent selected from one of an electron donor, halogen element or halogen-containing compound or mixtures thereof, and (2) an organometallic cocatalyst, the improvement comprising bringing said catalyst component into contact with an activity inhibitor being employed at a concentration in the range of 0.0001 to 0.01 gram-mol for 1 gram-atom of titanium in the catalyst component either

(i) prior to contact with the organometallic cocatalyst, or

(ii) after said catalyst component and organometallic cocatalyst have been mixed, and thereafter copolymerizing ethylene with an alpha-olefin, said activity inhibitor being selected from one of $CO_2$, CO, $SO_2$, allene compounds, conjugate dienes and alicyclic conjugated dienes.

2. A process as in claim 1 wherein the activity inhibitor is propadiene.

3. A catalyst system described in any of the preceding claims.

## Patentansprüche

1. Verfahren zur Copolymerisation von Ethylen mit einem alpha-Olefin zur Herstellung von LLDPE in Gegenwart eines Katalysatorsystems, das (1) eine titanhaltige Katalysatorkomponente, die durch Reduktion von Titantetrachlorid mit Wasserstoff oder Aluminium oder von einer Organometallverbindung ausgewählt aus Organometallverbindungen der Gruppen I bis III des Periodischen Systems, um Titantrichlorid oder einen Komplex davon zu ergeben, und durch Behandlung von Titantrichlorid oder seinem Komplex mit einem Aktivierungsmittel ausgewählt aus einem Elektronendonor, Halogenelement oder halogenhaltiger Verbindung oder Mischungen davon, erhalten wird, und (2) eine Organometallcokatalysator enthält, wobei die Verbesserung das Inkontaktbringen der Katalysatorkomponente mit einem Aktivitätsinhibitor umfaßt, der bei einer Konzentration im Bereich von 0,0001 bis 0,01 Gramm-Mol für 1 Gramm-Atom Titan in der Katalysatorkomponente eingesetzt wird, entweder

(i) vor dem Inkontaktbringen mit dem Organometallcokatalysator, oder

(ii) nachdem die Katalysatorkomponente und der Organometallcokatalysator gemischt wurden, und anschließend Copolymerisation von Ethylen mit einem alpha-Olefin, wobei der Aktivitätsinhibitor aus $CO_2$, CO, $SO_2$, Allenverbindungen, konjugierten Dienen und alicyclischen konjugierten Dienen ausgewählt wird.

2. Verfahren nach Anspruch 1, bei dem Aktivitätsinhibitor Propadien ist.

3. Katalysatorsystem nach einem der vorhergehenden Ansprüche.

## Revendications

1. Procédé de copolymérisation d'éthylène avec une alpha-oléfine pour produire du PELBD en présence d'une composition de catalyseur comprenant (1) un composant de catalyseur contenant un halogénure de titane, obtenu par réduction de tétrachlorure de titane avec de l'hydrogène, de l'aluminium ou un composé organométallique choisi entre des composés organiques des groupes I à III du Tableau Périodique pour obtenir du trichlorure de titane ou un complexe de trichlorure de titane, et traitement du trichlorure de titane ou de son complexe avec un agent activateur choisi entre un donneur d'électrons, un halogène élémentaire ou un composé contenant un halogène ou leurs mélanges, et (2) un cocatalyseur organométallique, le perfectionnement consistant à faire entrer ledit composant de catalyseur en contact avec un inhibiteur d'activité qui est utilisé à une concentration comprise dans la plage de 0,0001 à 0,01 molécule-gramme par atome-gramme de titane dans le composant de catalyseur.

(i) avant le contact avec le cocatalyseur organométallique, ou

(ii) après que le composant de catalyseur et le cocatalyseur organométallique ont été mélangés, puis à copolymériser de l'éthylène avec une alphat-oléfine, ledit inhibiteur d'activé étant choisi entre $CO_2$, CO, $SO_2$, des composés alléniques, des diènes conjugués et des diènes conjugués alicycliques.

2. Procédé suivant la revendication 1, dans lequel l'inhibiteur d'activité est le propadiène.

3. Composition de catalyseur telle que décrite dans l'une quelconque des revendications précédentes.